# EUROPEAN PATENT APPLICATION

(11) **EP 2 620 874 A1**
(43) Date of publication of application: **31.07.2013**
(21) Application number: 12193382.4
(22) Date of filing: 20.11.2012
(51) Int. Cl.: G06F 11/07, G06F 11/34

(54) **Multiprocessor system and log delivery method**

(30) Priority: 27.01.2012 JP 2012015692
(71) Applicant: FUJITSU LIMITED, Kawasaki-shi, Kanagawa 211-8588 (JP)
(72) Inventor: Higashiyama, Takashi, Ishikawa, 929-1192 (JP)
(74) Representative: HOFFMANN EITLE

(57) **Abstract**

Provided is a control system (100) that is provided with a plurality of control devices (110~180) each of which includes an arithmetic processing device (300, 400) and a storage unit (200) for storing logs of the arithmetic processing device (300, 400). The control system (100) includes a first generation unit (302), a second generation unit (402), and a delivery unit (403). The first generation unit (302) generates a first log file such that the plurality of logs of the arithmetic processing devices (300, 400) stored in the storage unit (200) of each control device (110~180) are stored within an upper limit of log capacitance determined based on a total number of the arithmetic processing devices (300, 400) in the control system (100) and in order based on priorities. The second generation unit (402) generates a second log file including a plurality of the first log files of the arithmetic processing devices (300, 400). The delivery unit (403) delivers the second log file to an external device.

## Description

### FIELD

The embodiments discussed herein are related to a control system and a log delivery method.

### BACKGROUND

Conventionally, some storage devices have a regular log delivery function to regularly deliver logs such as information on failure of the device as a log file. For example, the storage device having the regular log delivery function monitors troubles in mounted parts such as a disk for storing data or signs of the troubles to acquire the logs, and generates the log file based on the acquired logs. Then, the storage device delivers the log file to a maintenance center called a remote support center through a network.

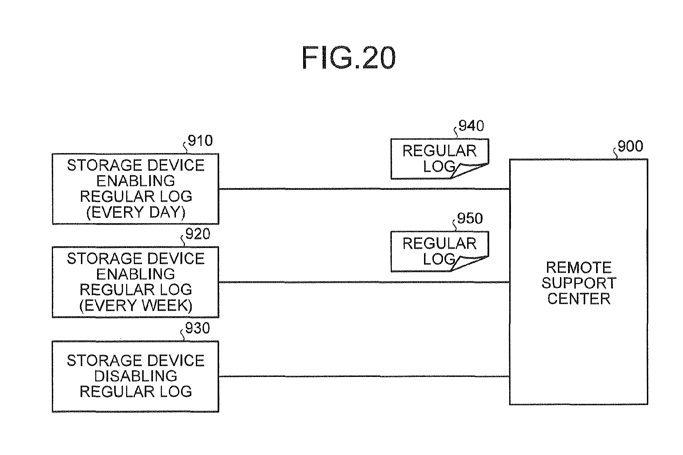

The regular log delivery function included in the storage device will be described with reference to FIG. 20. FIG. 20 is a diagram illustrating an example of the regular log delivery function of the storage device. Storage devices 910 to 930 illustrated in FIG. 20 each include the regular log delivery function, and are connected to a remote support center 900 through the network. Further, in the example illustrated in FIG. 20, it is assumed that the regular log delivery function is enabled to the storage devices 910 and 920, and disabled to the storage device 930.

The storage device 910 delivers a log file 940 generated through the acquisition of the logs to the remote support center 900 every day. In addition, the storage device 920 delivers a log file 950 generated through the acquisition of the logs to the remote support center 900 every week. Then, a manager in the remote support center 900 analyzes the log file to detect the possibility of warnings representing the abnormalities and the signs of the troubles in the storage devices 910 to 930.

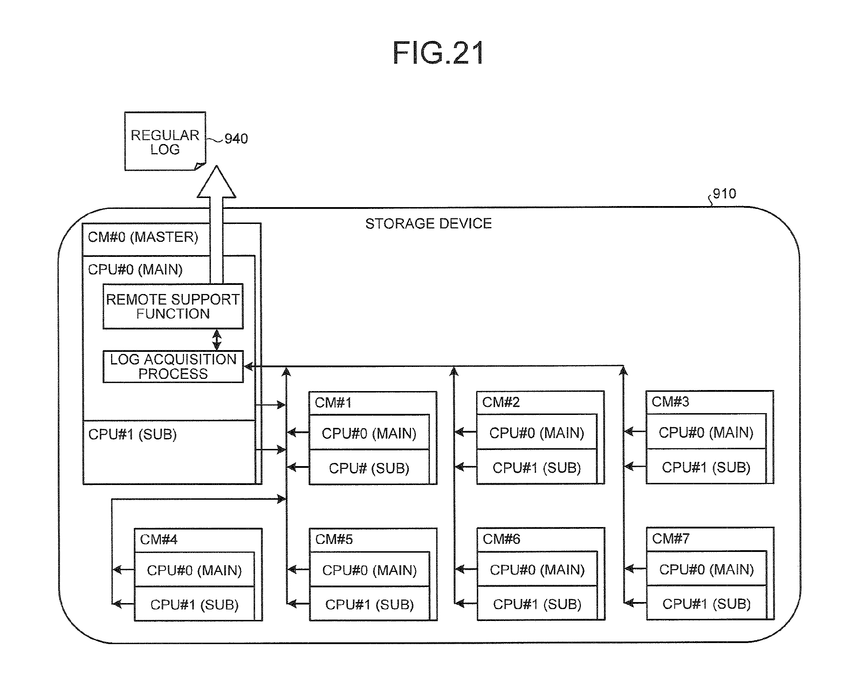

Next, a log acquisition process of the storage device will be described with reference to FIG. 21. FIG. 21 is a diagram illustrating an example of the log acquisition process of the storage device. As illustrated in FIG. 21, the storage device 910 includes 8 controller modules (hereinafter, referred to as CMs) CM#0 to CM#7 therein. In addition, each CM includes a main CPU#0 (Central Processing Unit) and a sub CPU#1. Each CPU manages the logs of the failure information.

In addition, one of 8 CMs is set to serve as a master CM in the storage device 910. The master CM presides over entire storage device. Further, in the example illustrated in FIG. 21, CM#0 is set as the master CM. Then, the main CPU#0 in CM#0 serving as the master CM activates a process of regularly acquiring the logs, generates the log file after the acquisition of the logs of all the CPUs, and delivers the log file 940 to the remote support center 900 using a remote support function. Further, the remote support function is a function of making a communication with the remote support center included in the CPU. In addition, in the following descriptions, the main CPU included in the master CM will be referred to as a master CPU.

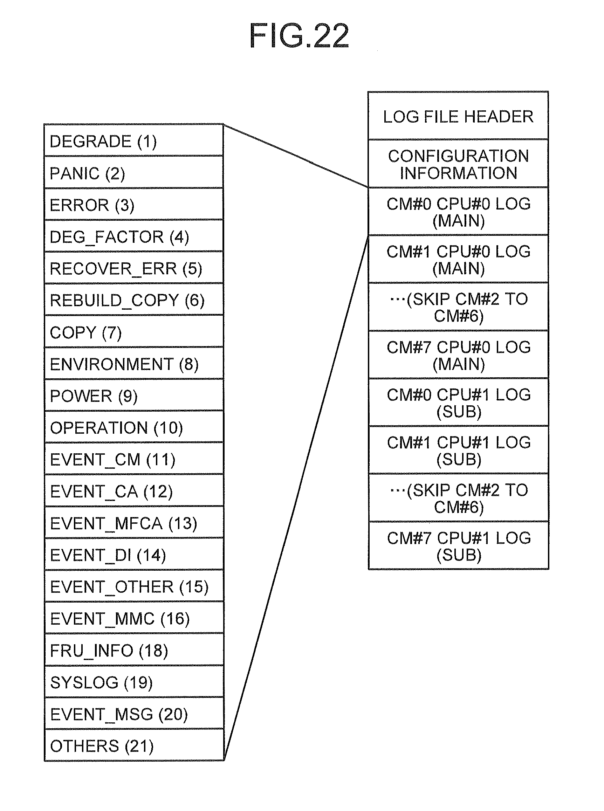

Next, a format of the log file generated by the storage device will be described with reference to FIG. 22. FIG. 22 is a diagram illustrating an exemplary format of the log file which is generated by the storage device. As illustrated in FIG. 22, the master CPU stores a header portion indicating its own log file and configuration information including system configuration information in the log file. Then, the master CPU stores the logs acquired from each main CPU#0 in ascending order from the one having a smaller CM number, and then stores the logs acquired from each sub CPU#1 in ascending order from the one having the smaller CM number.

Further, in terms of the logs of each CPU, the master CPU stores the logs in order of log types of management target. For example, the log types are numbered from (1) to (21), which are arranged in order of importance placed on the failure information. Further, the log type (17) is left as a missing number.
Patent Document 1: Japanese Laid-open Patent Publication No. 2010-152469
Patent Document 2: Japanese Laid-open Patent Publication No. 2011-158966
Patent Document 3: Japanese Laid-open Patent Publication No. 6-324916

However, the related art described above has a problem in that useful logs may be missed.

Specifically, the remote support center which receives the log files from a plurality of the storage devices limits the size of the log file to be received from each storage device to 1.44 MB per log for the sake of resources. In addition, it is difficult to increase the size over 1.44 MB for the sake of the resources of the remote support center.

For this reason, the storage device is not able to deliver the log which exceeds 1.44 MB among the log information acquired from each CPU. For example, in a case where the storage device is configured to include 2 CMs (4 CPUs), the regular logs exceed 1 MB in many cases. For this reason, in a case where the storage device is configured to include 8 CMs (16 CPUs) to a maximum extent, it is difficult to store the logs of all the CPUs in the log file.

As a result, in a case of storing the logs in order designated in the format, there is a strong possibility that the storage device is not able to store the log acquired from the CPU having a higher CM number or the log acquired from the sub CPU#1 in the log file. In this case, all the logs of the CPU, which are not able to be stored in the log file, are missed.

Accordingly, it is an object in one aspect of an embodiment of the invention to provide a control system and a log delivery method which can prevent the missing of the useful information.

### SUMMARY

According to an aspect of an embodiment, a control system is provided with a plurality of control devices each of which includes an arithmetic processing device and a storage unit that stores logs of the arithmetic processing device. The control system includes a first generation unit that generates a first log file such that the plurality of logs of the arithmetic processing devices stored in the storage unit of each control device are stored within an upper limit of log capacitance determined based on a total number of the arithmetic processing devices in the control system and in order based on priorities; a second generation unit that generates a second log file including a plurality of the first log files of the arithmetic processing devices; and a delivery unit that delivers the second log file to an external device.

### BRIEF DESCRIPTION OF DRAWINGS

FIG. 1 is a block diagram illustrating a configuration of a storage device according to a first embodiment;
FIG. 2 is a block diagram illustrating a configuration of a CM according to the first embodiment;
FIG. 3 is a diagram illustrating an example of information which is stored in a log format table;
FIG. 4 is a flowchart illustrating a processing sequence in a log file delivery process of the storage device according to the first embodiment;
FIG. 5 is a block diagram illustrating a configuration of a CM according to a second embodiment;
FIG. 6 is a diagram illustrating an example of information which is stored in a point addition table;
FIG. 7 is a diagram illustrating an example of a point addition method for events;
FIG. 8 is a diagram illustrating an exemplary operation of a point addition process in a case where a disk-related event is arisen from CPU#1 of CM#2;
FIG. 9 is a diagram illustrating an exemplary operation of the point addition process in a case where CM#5 is rebooted;
FIG. 10 is a diagram illustrating an exemplary operation of the point addition process in a case where a RAID group-related event is arisen from CPU#0 of CM#7;
FIG. 11 is a diagram illustrating an example of log types which are targets to be changed in priority with respect to an event;
FIG. 12 is a diagram illustrating an example of a process of changing a storage order defined in a log format table, which is performed by a change unit;
FIG. 13 is a diagram illustrating an example of a log file which is generated by a first generation unit;
FIG. 14 is a diagram illustrating an example of a point addition method for an initial value;
FIG. 15 is a diagram illustrating an example of an integration result of the point addition tables;
FIG. 16 is a diagram illustrating an example of results obtained from an upper limit calculating process;
FIG. 17 is a diagram illustrating an example of a log size changing process;
FIG. 18 is a diagram illustrating an example of process operations of a storage device according to the second embodiment;
FIG. 19 is a flowchart illustrating a processing sequence in a log file delivery process of the storage device according to the second embodiment;
FIG. 20 is a diagram illustrating an example of a regular log delivery function of the storage device;
FIG. 21 is a diagram illustrating an example of a log acquisition process of the storage device; and
FIG. 22 is a diagram illustrating an exemplary format of a log file which is generated by the storage device.

### DESCRIPTION OF EMBODIMENTS

Preferred embodiments of the present invention will be explained with reference to accompanying drawings.

Further, the invention is not limited to the embodiments. The respective embodiments can be appropriately combined in a scope without inconsistency in the process contents.

### [a] First Embodiment

In a first embodiment, a storage device will be exemplified as a control system. The storage device is provided with a plurality of CMs, and each of which includes a CPU and a storage unit which stores logs of the CPU. For example, the storage device stores a plurality of CPU logs stored in the storage unit of each CM, within the upper limit of log capacitance which is determined based on the total number of CPUs in the storage device and in order based on the priorities, and thus generates a first log file. In addition, the storage device generates a second log file which includes a plurality of the first log files in the respective CPUs. Then, the storage device delivers the second log file to a remote support center.

### Configuration of Storage Device according to First Embodiment

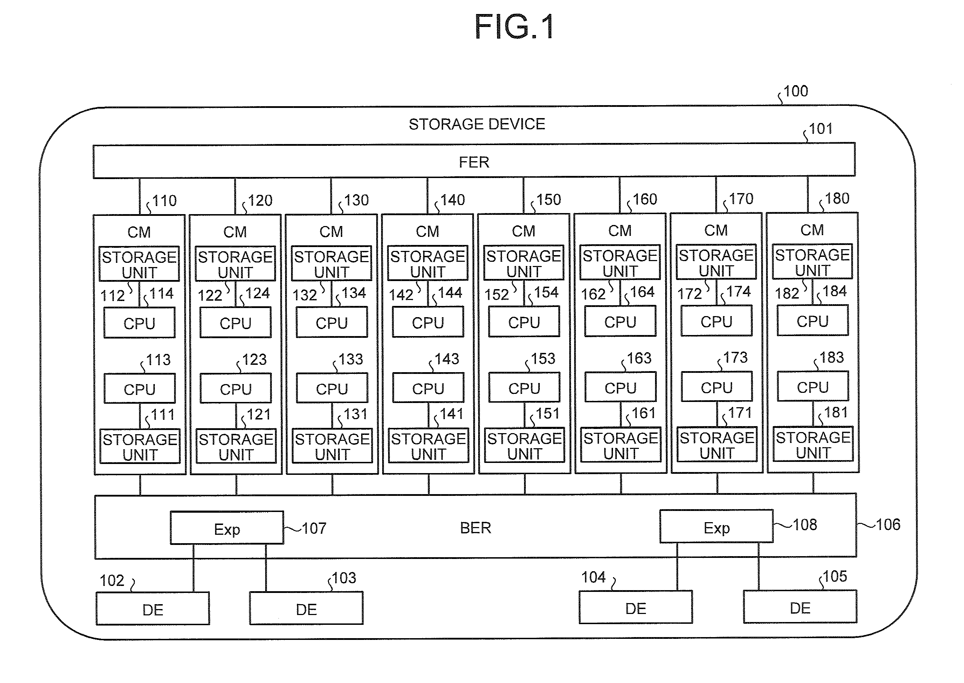

FIG. 1 is a block diagram illustrating a configuration of a storage device according to a first embodiment. As illustrated in FIG. 1, a storage device 100 includes an FER (Front End Router) 101, a DE (Device Enclosure) 102, a DE 103, a DE 104, a DE 105, and a BER (Back End Router) 106. In addition, the storage device 100 includes a CM (Controller Module) 110, a CM 120, a CM 130, a CM 140, a CM 150, a CM 160, a CM 170, and a CM 180. Further, the number of the CMs included in the storage device 100 may be any plural number without being limited to that illustrated in the drawing. In addition, the number of DEs included in the storage device 100 is not limited to that illustrated in the drawing.

In addition, the storage device 100 is connected to a host (not illustrated) such as a main frame through a network. In addition, the storage device 100 is connected to the remote support center (not illustrated) through the network. Further, the remote support center corresponds to a maintenance center which manages a log file delivered from the storage device.

The FER 101 provides interfacing with the host and the remote support center. The DE 102 includes a disk (not illustrated). The disk is in a RAID (Redundant Arrays of Inexpensive Disks) to store user data.

The BER 106 includes an Exp (Expand) 107 and an Exp 108. The Exp 107 connects the CMs 110 to 180 with the DEs 102 and 103, and serves as a relay between the CMs 110 to 180 and the DEs 102 and 103 to exchange data. In addition, the Exp 108 connects the CMs 110 to 180 with the DEs 104 and 105, and serves as a relay between the CMs 110 to 180 and the DEs 104 and 105 to exchange data. Further, the number of the Exps included in the BER 106 is not limited to that illustrated in the drawing.

Each of the CMs 110 to 180 performs an input/output process through the BER 106, in which data received from the host through the FER 101 is input or output with respect to the DEs 102 to 105. As illustrated in FIG. 1, each of the CMs 110 to 180 includes two storage units and two CPUs (Central Processing Unit). Herein, each CM is configured such that the storage unit is provided for each CPU. Further, the number of the CPUs included in each CM is not limited to that illustrated in the drawing.

For example, as illustrated in FIG. 1, the CM 110 includes a storage unit 111, a storage unit 112, a CPU 113, and a CPU 114. Herein, the storage unit 111 is provided for the CPU 113, and the storage unit 112 is provided for the CPU 114.

Similarly, the CM 120 includes a storage unit 121, a storage unit 122, a CPU 123, and a CPU 124. Herein, the storage unit 121 is provided for the CPU 123, and the storage unit 122 is provided for the CPU 124. In addition, the CM 130 includes a storage unit 131, a storage unit 132, a CPU 133, and a CPU 134. Herein, the storage unit 131 is provided for the CPU 133, and the storage unit 132 is provided for the CPU 134. In addition, the CM 140 includes a storage unit 141, a storage unit 142, a CPU 143, and a CPU 144. Herein, the storage unit 141 is provided for the CPU 143, and the storage unit 142 is provided for the CPU 144.

In addition, the CM 150 includes a storage unit 151, a storage unit 152, a CPU 153, and a CPU 154. Herein, the storage unit 151 is provided for the CPU 153, and the storage unit 152 is provided for the CPU 154. In addition, the CM 160 includes a storage unit 161, a storage unit 162, a CPU 163, and a CPU 164. Herein, the storage unit 161 is provided for the CPU 163, and the storage unit 162 is provided for the CPU 164.

In addition, the CM 170 includes a storage unit 171, a storage unit 172, a CPU 173, and a CPU 174. Herein, the storage unit 171 is provided for the CPU 173, and the storage unit 172 is provided for the CPU 174. In addition, the CM 180 includes a storage unit 181, a storage unit 182, a CPU 183, and a CPU 184. Herein, the storage unit 181 is provided for the CPU 183, and the storage unit 182 is provided for the CPU 184. Further, the CPUs included in the CMs 110 to 180 are connected to make a communication with each other using a bus through the FER 101.

Herein, one of two CPUs included in each CM serves as a main CPU, and the other serves as a sub CPU. Herein, the sub CPU is a CPU which is used in a case where a process load of the main CPU is heavy.

Further, herein below, the CMs will be appropriately described by assigning CM numbers as below. The CM 110 is assigned by "CM#0;" the CM 120 is assigned by "CM#1;" the CM 130 is assigned by "CM#2;" the CM 140 is assigned by "CM#3;" and the CM 150 is assigned by "CM#4." Similarly, the CM 160 is assigned by "CM#5;" the CM 170 is assigned by "CM#6;" and the CM 180 is assigned by "CM#7." In addition, in the following descriptions, the main CPUs and the sub CPUs included in the CMs 110 to 180 will be appropriately denoted by "CPU#0" and "CPU#1," respectively.

In addition, any one of the CMs 110 to 180 is set as a master CM in the storage device 100. In the following descriptions, the CM 110 will be described assuming as the "master CM." The main CPU included in the master CM will be described by referring to as a "master CPU." In addition, a CPU excepting for the master CPU among the CPUs included in each of the CMs 110 to 180 will refer to as the "other CPU." Further, the master CM is not limited to the CM 110, but may be changed to any other CM.

In the storage device 100 including the plurality of the CMs as described above, the CPUs included in the plurality of the CMs each cause the storage unit provided in every CPU to store logs of the corresponding CPU in the storage unit provided in the CPU. In addition, each of the CPUs included in the plurality of the CMs generates a log file for storing the logs stored in the storage unit, in order based on a log format which defines a storage order of the logs, within the upper limit of the log capacitance determined based on the number of the CPUs included in the plurality of the CMs. In addition, each of the other CPUs excepting for the master CPU among the CPUs included in the plurality of the CMs transmits the log file to the master CPU. In addition, the master CPU receives the log files from the other CPUs. Then, the master CPU generates a log file of all the CPUs including the generated log file and the received log files from the other CPUs. The master CPU delivers the log file of all the CPUs to the remote support center.

In this way, the storage device 100 according to the first embodiment generates the log file including the log files corresponding to all the CPUs, so that it is possible to prevent the missing of useful logs.

### Functional Configuration of CM according to First Embodiment

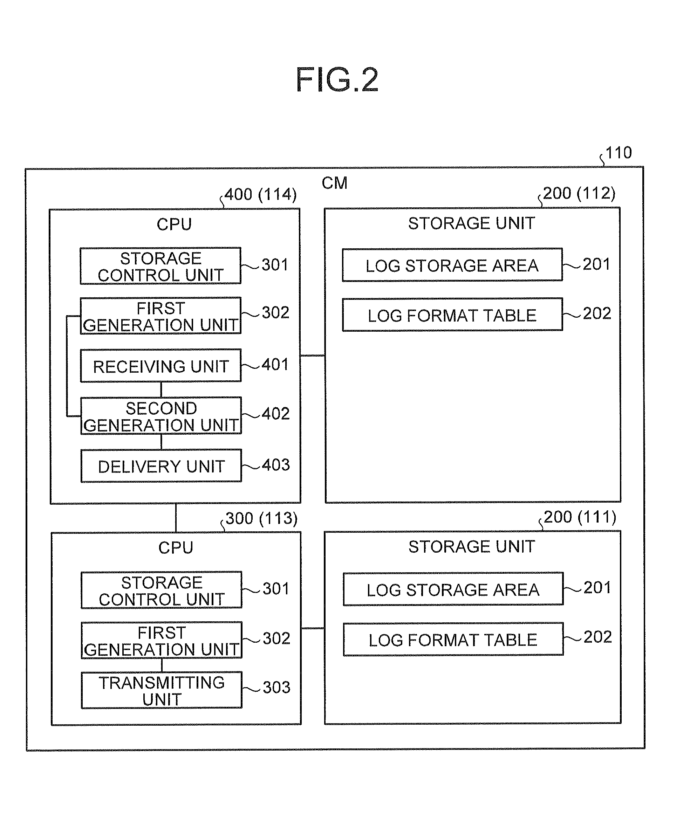

Next, a functional configuration of the CMs 110 to 180 according to the first embodiment will be described with reference to FIG. 2. Herein, the CM 110 serving as the master CM will be given as an example. FIG. 2 is a block diagram illustrating a configuration of the CM according to the first embodiment. As illustrated in FIG. 2, the CM 110 according to the first embodiment includes the storage unit 111, the storage unit 112, the CPU 113, and the CPU 114.

In addition, in the following descriptions, the CPU 113 is given as the sub CPU and the CPU 114 is given as the main CPU. Since the CM 110 is the master CM, the CPU 113 corresponds to the "other CPU," and the CPU 114 corresponds to the "master CPU." In this case, all the CPUs included in the CMs 120 to 180 correspond to the "other CPUs." For this reason, the CPU 113 is denoted by "CPU 300" as an example of the "other CPU," and the CPU 114 is denoted by "CPU 400" as an example of the "master CPU." In addition, the storage units 111 and 112 store the same information, and thus are denoted by the "storage unit 200."

The storage unit 200 is a semiconductor memory element such as a RAM (Random Access Memory) and an SSD (Solid State Drive), which includes a log storage area 201 and a log format table 202. The log storage area 201 stores the logs.

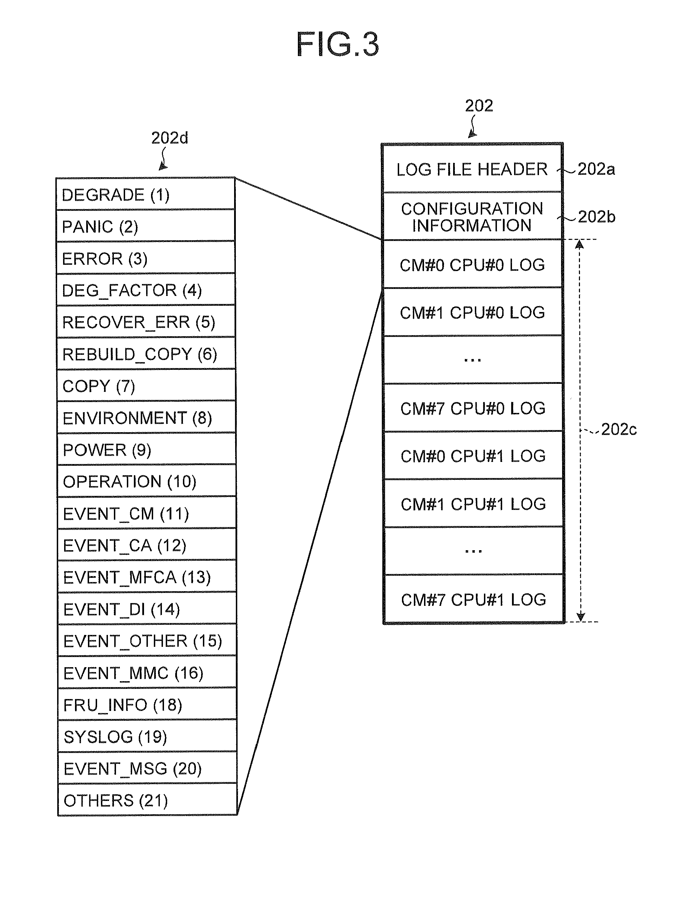

The log format table 202 stores information which indicates a storage order in which the logs are stored as the log file. An example of information which is stored by the log format table will be described with reference to FIG. 3. FIG. 3 is a diagram illustrating an example of the information which is stored by the log format table.

As illustrated in FIG. 3, the log format table 202 is stored in the log file in order as follows: a log file header 202a, configuration information 202b, and logs 202c acquired from the respective CPUs.

In addition, as illustrated in FIG. 3, the log format table 202 stores the logs acquired from the respective main CPU#0s in the log file in an ascending order of the CM number. Then, the log format table 202 stores the logs acquired from the respective sub CPU#1s, following the logs acquired from the respective main CPU#0s in the log file in an ascending order of the CM number.

In addition, as illustrated in FIG. 3, the logs acquired from each CPU are stored in the order listed in log types 202d. The log types are attached by numbers from (1) to (21), and are arranged in order of importance in terms of failure information. Further, the log type (17) is left as a missing number.

Herein, a log representing a trouble in a device is stored in "DEGRADE(1)" to be stored as the log type 202d. In addition, a log representing a panic is stored in "PANIC(2)" to be stored as the log type 202d. In addition, a log representing an error or the like of firmware is stored in "ERROR(3)" to be stored as the log type 202d.

In addition, a log representing a cause for the trouble in a device is stored in "DEG_FACTOR(4)" to be stored as the log type 202d. In addition, a log representing a setting for notifying an information update fail to recovery success is stored in "RECOVER_ERR(5)" to be stored as the log type 202d. In addition, a log regarding a copy of a RAID configuration is stored in "REBUILD_COPY(6)" to be stored as the log type 202d. In addition, a log regarding a copy of the RAID configuration is stored in "COPY(7)" to be stored as the log type 202d.

In addition, a log representing a state of a power source, a fan, or the like is stored in "ENVIRONMENT(8)" to be stored as the log type 202d. In addition, a log representing an ON time of the power source or the like obtained by monitoring the power source is stored in "POWER(9)" to be stored as the log type 202d. In addition, a log representing a function used for the storage device is stored in "OPERATION(10)" to be stored as the log type 202d.

In addition, a CM-related log is stored in "EVENT_CM(11)" to be stored as the log type 202d. In addition, a CA-related log is stored in "EVENT_CA(12)" to be stored as the log type 202d. In addition, an MFCA-related log is stored in "EVENT_MFCA(13)" to be stored as the log type 202d. In addition, a disk-related log is stored in "EVENT_DI(14)" to be stored as the log type 202d.

In addition, a log belonging to other events is stored in "EVENT_OTHER(15)" to be stored as the log type 202d. In addition, a log regarding an MMC (Module Management Controller) for monitoring services of the CM is stored in "EVENT_MMC(16)" to be stored as the log type 202d. In addition, a log regarding an FRU (Field-Replaceable Unit) for monitoring services of the CM is stored in "FRU_INFO(18)" to be stored as the log type 202d.

In addition, a log representing an exchanging operation with firmware on LINUX (registered trademark) is stored in "SYSLOG(19)" to be stored as the log type 202d. In addition, a log regarding a function of notifying a failure is stored in "EVENT_MSG(20)" to be stored as the log type 202d. In addition, a log representing that there is a log unwritten in the log file is stored in "OTHERS(21)" to be stored as the log type 202d.

Returning back to FIG. 2, the CPU 300 includes a storage control unit 301, a first generation unit 302, and a transmitting unit 303.

The storage control unit 301 causes the log storage area 201 to store the logs. In addition, the storage control unit 301 monitors a specific log by monitoring unique codes assigned to the logs.

The first generation unit 302 generates a log file for storing the logs stored in the log storage area 201, in order based on the log format table 202, within the upper limit of the log capacitance determined based on the number of the CPUs included in the plurality of the CMs.

In addition, the upper limit of the log capacitance for each CPU is determined by "(Limit Value of Regular Log - Size of Log Header - Size of Configuration Information)/The number of CPUs." Herein, the limit value of the regular log is assumed to be 1.44 MB per log. In addition, the size of the log header is a fixed value. In addition, the configuration information includes information related to the disk and the RAID included in the storage device, and is set as a fixed value for each storage device. In other words, the upper limit is set to be a predetermined value for each storage device. Further, the limit value 1.44 MB of the regular log is assumed to be 1,457,650 bytes managed in the storage device 100.

The transmitting unit 303 transmits the log file generated by the first generation unit 302 to the CPU 400 serving as the master CPU.

The CPU 400 includes the storage control unit 301, the first generation unit 302, a receiving unit 401, a second generation unit 402, and a delivery unit 403. Herein, the functional sections having the same functions as those of the respective components included in the CPU 300 illustrated in FIG. 2 will be denoted by the same reference numerals and the detailed descriptions will not be provided.

The receiving unit 401 receives the log files from the respective CPUs 300 serving as the other CPUs.

The second generation unit 402 generates a log file of all the CPUs including the log file generated by the first generation unit 302 of the subject device and the log files received from the respective CPUs 300 serving as the other CPUs.

For example, in order based on the log format table 202, the second generation unit 402 generates a log file of all the CPUs including the log file generated by the first generation unit 302 of the subject device and the log files received from the respective CPUs 300 serving as the other CPUs. Further, the log file generated by the second generation unit 402 is referred to as the "log file of all the CPUs" for distinction from the log file generated by the first generation unit 302.

The delivery unit 403 delivers the log file of all the CPUs generated by the second generation unit 402 to the remote support center.

### Processing Sequences in Process performed by Storage Device according to First Embodiment

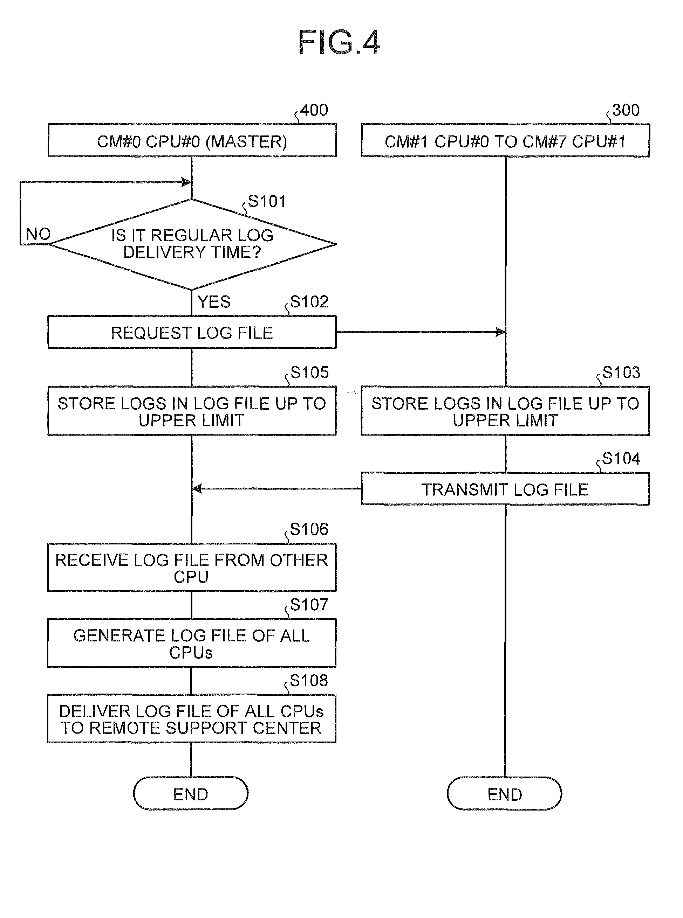

Next, a processing sequence in a log file delivery process of the storage device 100 according to the first embodiment will be described with reference to FIG. 4. FIG. 4 is a flowchart illustrating the processing sequence in the log file delivery process of the storage device according to the first embodiment.

As illustrated in FIG. 4, in a case where it is a regular log delivery time (Yes in step S101), the CPU 400 serving as the master CPU requests the log file from the CPU 300 serving as the other CPU (step S102).

The first generation unit 302 in the CPU 300 serving as the other CPU stores the logs in the log file up to the upper limit (step S103). The transmitting unit 303 transmits the log file to the CPU 400 serving as the master CPU (step S104). In addition, the first generation unit 302 in the CPU 400 serving as the master CPU stores the logs in the log file up to the upper limit (step 5105).

The receiving unit 401 in the CPU 400 serving as the master CPU receives the log files from the CPUs 300 serving as the other CPUs (step S106). Then, the second generation unit 402 generates the log file of all the CPUs, which includes the log files received from the CPUs 300 serving as the other CPUs and the generated log file (step S107). The delivery unit 403 delivers the log file of all the CPUs to the remote support center (step S108).

### Effect of First Embodiment

As described above, the storage device 100 according to the first embodiment acquires the log files from the respective CPUs within the upper limit of the log size which is determined based on the number of the CPUs included in the storage device 100, and then generates the log file including the logs of all the CPUs. As a result, the storage device 100 according to the first embodiment can prevent the missing of the important logs.

### [b] Second Embodiment

By the way, the storage device can be set to deliver the regular logs every day or every week. Within the setting period, the flow rates of the logs generated in the respective CPUs are changed. In addition, the flow rates of the logs are changed by events arisen from the respective CPUs.

Therefore, in a case where the uniformly-sized upper limit is set for the respective CPUs, for example, when the events are arisen from a certain CPU over the log size, the possibility to miss the logs increases. In the second embodiment, the description will be made in connection with an example in which the storage device calculates the upper limit for each CPU based on the events generated in the respective CPUs.

### Configuration of Storage Device according to Second Embodiment

The configuration of a storage device according to the second embodiment is similar to that of the storage device according to the first embodiment illustrated in FIG. 1 except that some parts of the functional configuration of the CPUs included in each CM are different. Therefore, the second embodiment will be described such that the storage device 100 is referred to as a storage device 100a, and the respective CMs included in the storage device 100a are referred to as CMs 110a to 180a.

### Functional Configuration of CM according to Second Embodiment

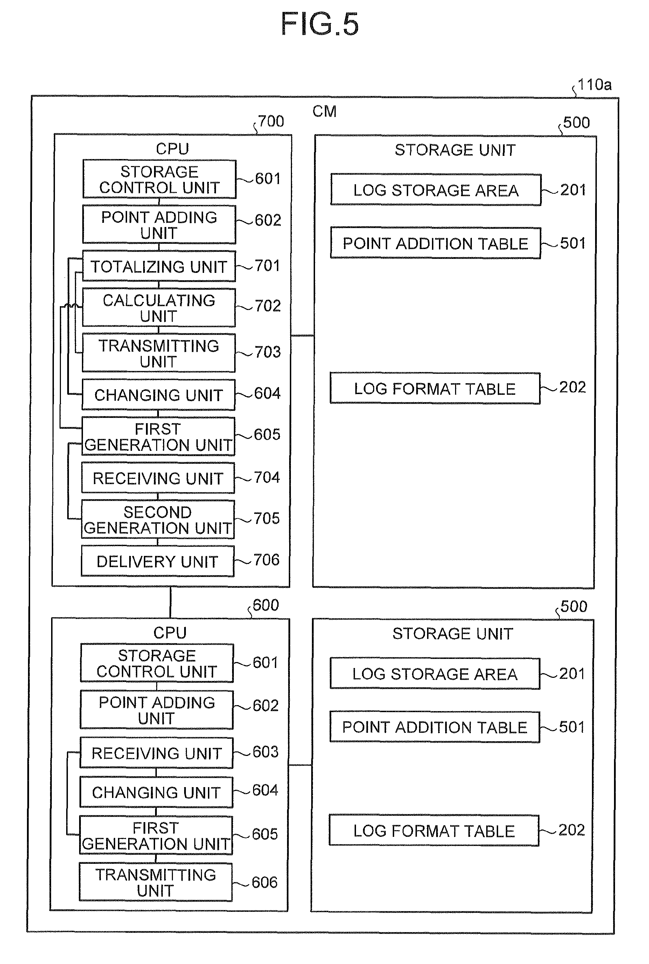

Next, the functional configuration of the CM 110a according to the second embodiment will be described with reference to FIG. 5. FIG. 5 is a block diagram illustrating a configuration of the CM according to the second embodiment. As illustrated in FIG. 5, the CM 110a according to the second embodiment includes two storage units 500, a CPU 600, and a CPU 700. Herein, one of the storage units 500 is used for the CPU 600, and the other is used for the CPU 700.

The storage unit 500 is a semiconductor memory element such as the RAM and the SSD, and includes the log storage area 201, a point addition table 501, and the log format table 202. Further, tables for storing the same information as that in the respective tables illustrated in FIG. 2 will be denoted by the same reference numeral, and the detailed description thereof will not be made.

The point addition table 501 stores accumulated values of points added up such that the arisen events are associated with each CPU. Further, the format of the information stored in the point addition table 501 is common to the respective CPUs. When an event is arisen, the point addition is performed for the event with being associated with the event-arising CPU, and the added point is stored in the point addition table 501 of the event-arising CPU.

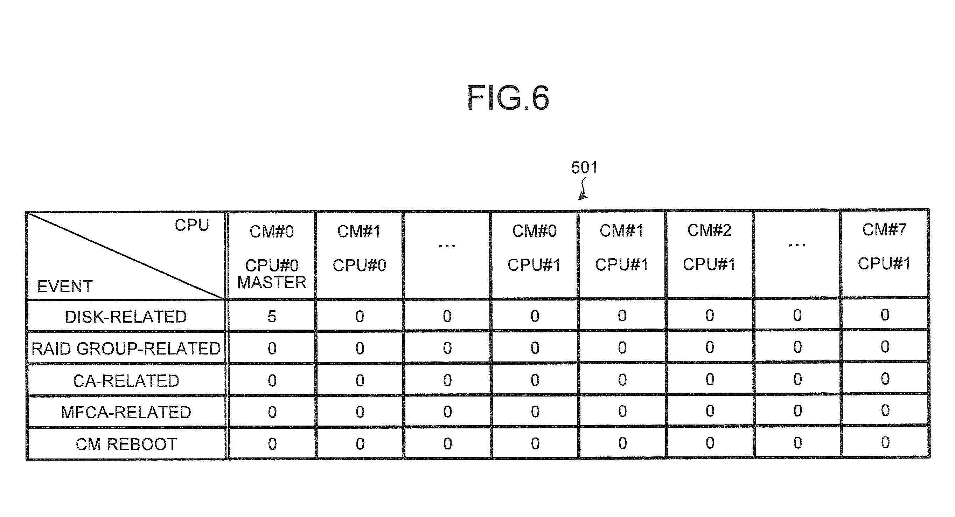

An example of the information stored in the point addition table will be described with reference to FIG. 6. FIG. 6 is a diagram illustrating an example of information which is stored in the point addition table. As illustrated in FIG. 6, the accumulated values of added points are stored in the point addition table 501 such that "Disk-related," "RAID Group-related," "CA-related," "MFCA-related," and "CM Reboot" as arisen events are associated with the "CPUs."

Herein, the "Disk-related" stored in the point addition table 501 represents an event related to the disk to be mounted. The "RAID Group-related" represents an event related to a RAID group which is set in the storage device 100a.

The "CA-related" represents an event related to a CA (Channel Adapter) which is a component mounted on the storage device 100a to make an interface with the host. The "MFCA-related" represents an event related to an MFCA (Main Frame Channel Adapter) which makes an interface with the host. Further, in a case where the storage device does not correspond to the main frame, the "MFCA-related" is not set. The "CM Reboot" represents a rebooting process of its own CM when a soft error occurs.

In an example illustrated in FIG. 6, the disk-related event is arisen from CPU#0 of CM#0, and the accumulated value is 5 points.

Returning to FIG. 5, a CPU 600 includes a storage control unit 601, a point adding unit 602, a receiving unit 603, a changing unit 604, a first generation unit 605, and a transmitting unit 606.

The storage control unit 601 causes the log storage area 201 to store the logs. In addition, the storage control unit 601 monitors a specific log by monitoring unique codes assigned to the logs. When the specific log is stored in the log storage area, the storage control unit 601 notifies the point adding unit 602 of the fact that the event is arisen.

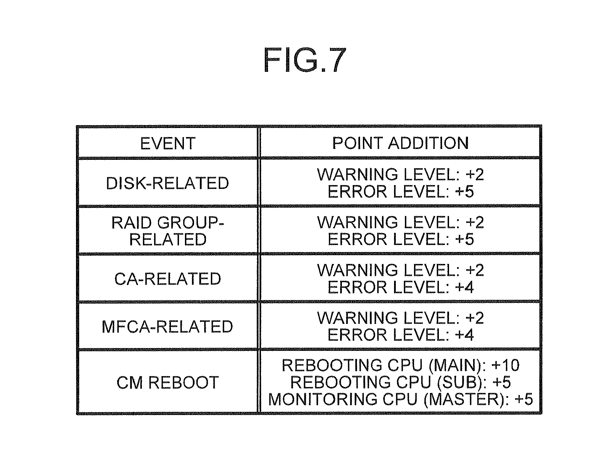

The point adding unit 602 adds points with respect to the event arisen from each CPU based on a recoded log with being associated with the event. An example of a point addition method performed on the event by the point adding unit 602 will be described with reference to FIG. 7. FIG. 7 is a diagram illustrating an example of the point addition method for the events.

As illustrated in FIG. 7, the point adding unit 602 adds 2 points for the "Disk-related" event in a case of a warning level; and 5 points in a case of an error level. In addition, the point adding unit 602 adds 2 points for the "RAID Group-related" event in a case of the warning level; and 5 points in a case of the error level.

In addition, the point adding unit 602 adds 2 points for the "CA-related" event in a case of the warning level; and 4 points in a case of the error level. In addition, the point adding unit 602 adds 2 points for the "MFCA-related" event in a case of the warning level; and 4 points in a case of the error level.

In addition, the point adding unit 602 adds 10 points for the "CM Reboot" event arisen from the main CPU included in the rebooting CM; 5 points for the "CM Reboot" event arisen from the sub CPU included in the rebooting CM; and 5 points for the "CM Reboot" event arisen from the master CPU.

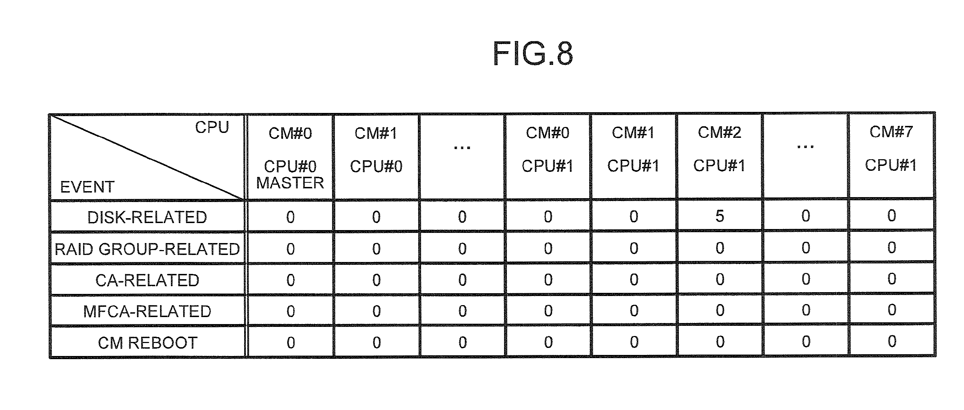

Next, the operations of the point addition process performed by the point adding unit 602 will be described with reference to FIGS. 8 to 10. FIG. 8 is a diagram illustrating an exemplary operation of a point addition process in a case where a disk-related event is arisen from CPU#1 of CM#2. Further, in the example illustrated in FIG. 8, a case where the disk-related event at the error level is arisen from CPU#1 of CM#2 will be described. The point adding unit 602 included in CPU#1 of CM#2 adds point "5" for the "Disk-related" event corresponding to the "CM#2 CPU#1" in the point addition table 501 to indicate the error level.

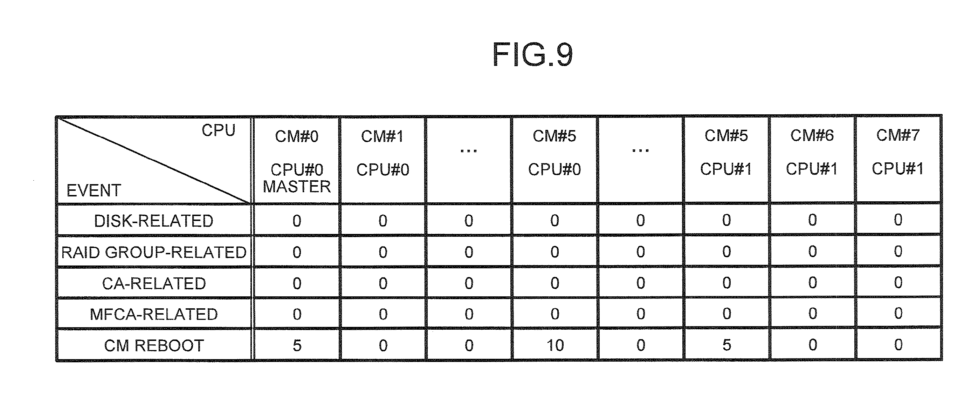

FIG. 9 is a diagram illustrating an example of operations in the point addition process in a case where CM#5 is rebooted. Herein, since a number of logs are arisen at the time of rebooting, the adding point is set large. As illustrated in FIG. 9, point "10" is added for the "CM Reboot" event corresponding to the "CM#5 CPU#0" in the point addition table 501, and point "5" is added for the "CM Reboot" event corresponding to the "CM#5 CPU#1." In addition, since the reboot-monitoring master CPU also performs a process of incorporating the rebooting CMs , point "5" is added for the "CM Reboot" event corresponding to the "CM#0 CPU#0" in the point addition table 501.

Further, in a case where CM#5 is caused to be rebooted, the point addition process is not able to be performed on the rebooting CM#5. For this reason, the point addition process in a case of the rebooting is performed by the point adding unit 602 included in the master CPU. In other words, since the detection of the CM Reboot event is made in the master CPU, the point addition table 501 of the master CPU is updated at the time of rebooting.

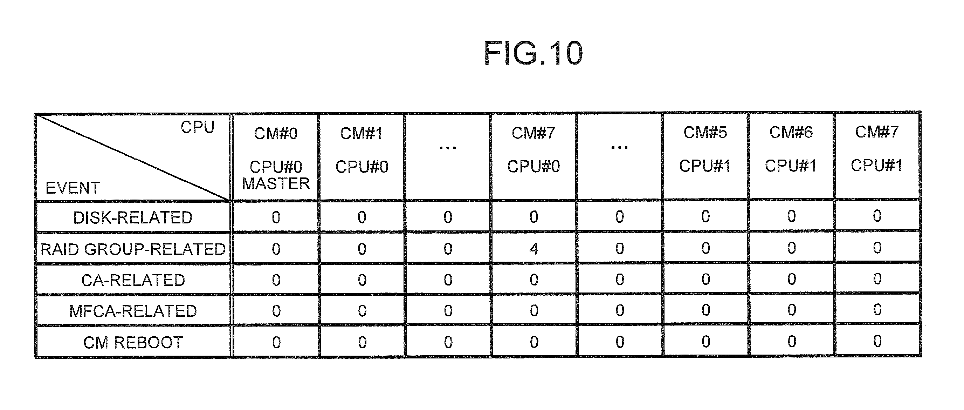

FIG. 10 is a diagram illustrating an exemplary operation of the point addition process in a case where a RAID group-related event is arisen from CPU#0 of CM#7. Further, in the example illustrated in FIG. 10, a case where the RAID Group-related event at the warning level is arisen from CPU#0 of CM#7 twice will be described. The point adding unit 602 included in CPU#0 of CM#7 adds point "2" twice for the "RAID Group-related" event corresponding to "CM#7 CPU#0" in the point addition table 501 to indicate the warning level. As a result, the accumulated value for the "RAID Group-related" event corresponding to "CM#7 CPU#0" in the point addition table 501 becomes 4 points.

Returning to FIG. 5, the receiving unit 603 receives, from a CPU 700 serving as the master CPU, the upper limit calculated by a calculating unit 702 to be described below and the point addition table totalized by a totalizing unit 701 to be described below. The receiving unit 603 outputs the point addition table totalized by the totalizing unit 701 to the changing unit 604. In addition, the receiving unit 603 outputs the upper limit calculated by the calculating unit 702 to the first generation unit 605.

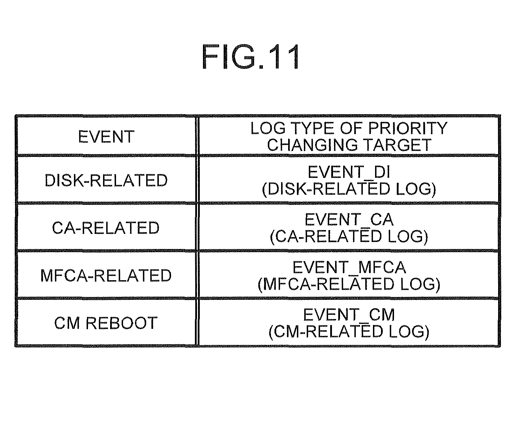

The changing unit 604 changes the storage order defined in the log format table 202 based on the point addition table totalized by the totalizing unit 701. An example of a correspondence relation between an added result and a log type which is a target to be changed in priority with respect to the event will be described with reference to FIG. 11. FIG. 11 is a diagram illustrating an example of the log types which are targets to be changed in priority with respect to the event.

As illustrated in FIG. 11, the changing unit 604 associates the "CM Reboot" in the point addition table with the log type "EVENT_CM(11)." In addition, the changing unit 604 associates the "CA-related" in the point addition table with the log type "EVENT_CA(12)." In addition, the changing unit 604 associates the '"MFCA-related" in the point addition table with the log type "EVENT_MFCA(13)." In addition, the changing unit 604 associates the "Disk-related" in the point addition table with the log type "EVENT_DI(14)."

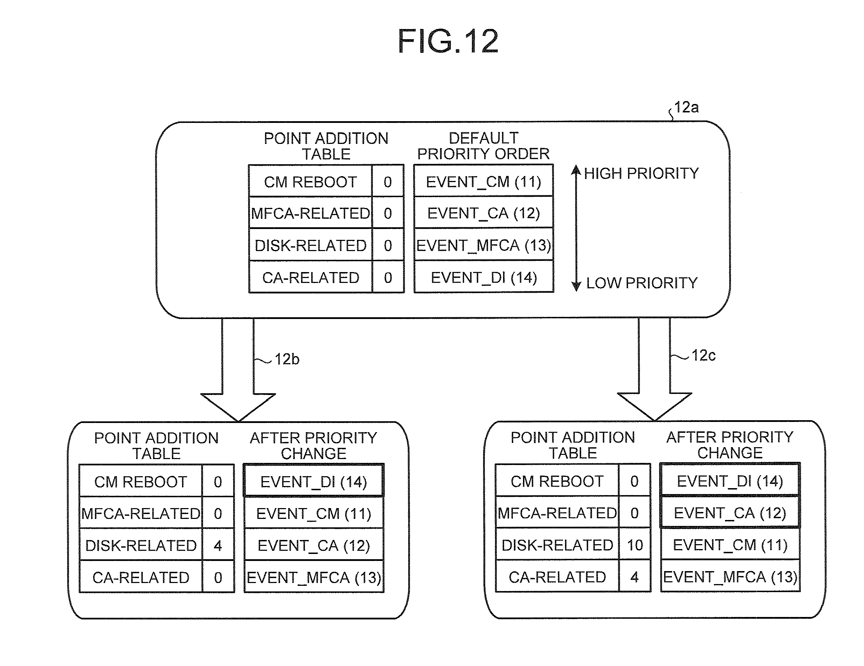

Next, a process of changing the storage order defined in the log format table 202 by the changing unit 604 will be described with reference to FIG. 12. FIG. 12 is a diagram illustrating an example of a process of changing the storage order defined in the log format table, which is performed by the change unit.

As denoted by the reference numeral 12a in FIG. 12, the point addition table is assumed to have events which are not added with points at all. In this case, the storage order defined in the log format table 202 is as follows: "EVENT_CM(11)," "EVENT_CA(12)," "EVENT_MFCA(13)," and "EVENT_DI(14)."

Next, a case of transition from the state denoted by the reference numeral 12a in FIG. 12 to the state denoted by the reference numeral 12b in FIG. 12 will be described. In the state denoted by the reference numeral 12b, the accumulated value of the "Disk-related" event in the point addition table is 4 points, and the accumulated values of the other events are 0 points. For this reason, the changing unit 604 raises the storage order of the log type "EVENT_DI(14)" corresponding to the "Disk-related" event which has the highest accumulated value. In other words, the changing unit 604 changes the storage order defined in the log format table 202 as follows: "EVENT_DI(14)," "EVENT_CM(11)," "EVENT_CA(12)," and "EVENT_MFCA(13)."

Next, a case of transition from the state denoted by the reference numeral 12a in FIG. 12 to the state denoted by the reference numeral 12c in FIG. 12 will be described. In the state denoted by the reference numeral 12c, the accumulated value of the "Disk-related" event in the point addition table is 10 points, the accumulated value of the "CA-related" event is 4 points, and the accumulated values of the other events are 0 points. For this reason, the changing unit 604 raises the storage order of the log type "EVENT_DI(14)" corresponding to the "Disk-related" event and the log type "EVENT_CA(12)" corresponding to the "CA-related" event, which have the highest accumulated values, to be ranked in high order of the accumulated value. In other words, the changing unit 604 changes the storage order defined in the log format table 202 as follows: "EVENT_DI(14)," "EVENT_CA(12)," "EVENT_CM(11)," and "EVENT_MFCA(13)."

The changing unit 604 notifies the first generation unit 605 of the changed result. Further, in a case where there is no change, the changing unit 604 notifies the first generation unit 605 of the fact that there is no change in the storage order defined in the log format table 202.

The first generation unit 605 generates the log file for storing the logs stored in the log storage area 201, in order based on the log format which defines the storage order of the logs, within the upper limit calculated by the calculating unit 702 to be described below.

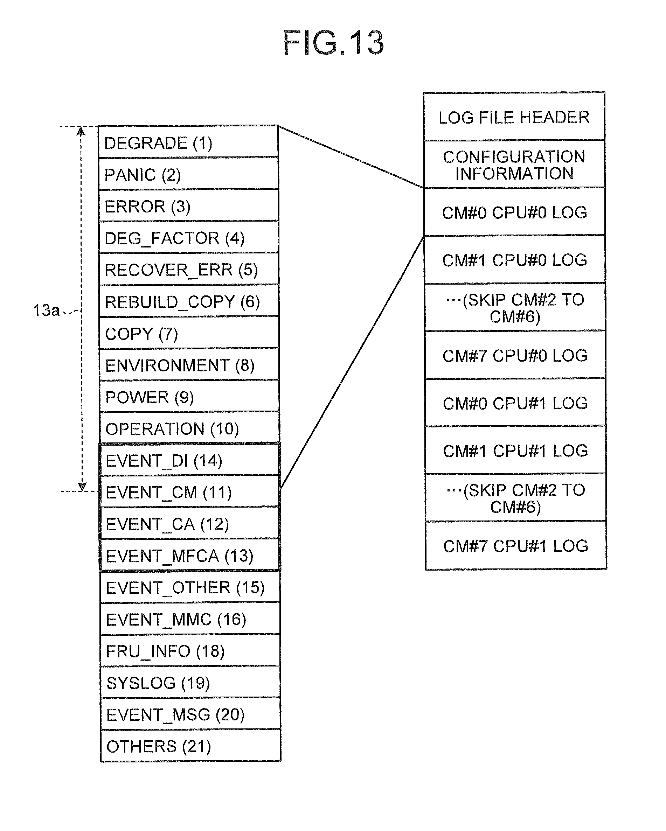

Herein, the first generation unit 605 generates the log file for storing the logs stored in the log storage area 201, in the storage order which has been changed by the changing unit 604, within the upper limit. An example of the log file which is generated by the first generation unit 605 will be described with reference to FIG. 13. FIG. 13 is a diagram illustrating an example of the log file which is generated by the first generation unit. Further, in FIG. 13, the description will be made in connection with an example in which the first generation unit 605 generates the log file in the state denoted by the reference numeral 12b in FIG. 12.

As illustrated in FIG. 13, the first generation unit 605 stores the logs in order defined in the log format table 202 from "DEGRADE(1)" to "OPERATION(10)."

The first generation unit 605 stores the logs in order changed by the changing unit 604. In other words, the first generation unit 605 stores the logs in order as follows: "EVENT DI(14)," "EVENT_CM(11)," "EVENT_CA(12)," and "EVENT_MFCA(13)." Further, the reference numeral 13a denoted in FIG. 13 represents the upper limit calculated by the calculating unit 702, and the first generation unit 605 stores the logs up to the upper limit. Then, the first generation unit 605 outputs the generated log file to the transmitting unit 606.

The transmitting unit 606 transmits the log file generated by the first generation unit 605 to the CPU 700 serving as the master CPU.

The CPU 700 includes the storage control unit 601, the point adding unit 602, the totalizing unit 701, the calculating unit 702, a transmitting unit 703, the changing unit 604, the first generation unit 605, a receiving unit 704, a second generation unit 705, and a delivery unit 706. Herein, the functional sections having the same functions as those of the respective components included in the CPU 600 illustrated in FIG. 5 will be denoted by the same reference numerals and the detailed descriptions will not be provided.

The totalizing unit 701 acquires the addition results of the point adding units 602 from the respective CPUs included in the plurality of the CMs, and totalizes the results. For example, the totalizing unit 701 extracts the point addition values which are included in the point addition tables 501 acquired from the other CPUs and the point addition table 501 included in the CPU 700. Further, the totalizing unit 701 generates the point addition table which is obtained by adding the initial values of the respective CPUs to totalize the total points of the respective CPUs.

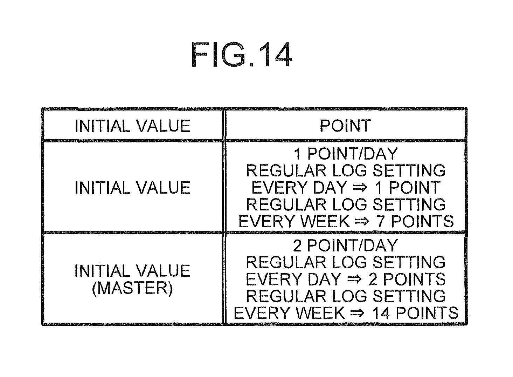

Next, an example of the point addition method for the initial value will be described with reference to FIG. 14. FIG. 14 is a diagram illustrating an example of a point addition method for an initial value. As illustrated in FIG. 14, the totalizing unit 701 adds 1 point as the initial value for the other CPUs every day. In other words, in a case where the setting of the regular log is the "every day," the totalizing unit 701 adds 1 point as the initial value; further, in a case where the setting of the regular log is the "every week," the totalizing unit 701 adds 7 points as the initial value.

In addition, the totalizing unit 701 adds 2 points as the initial value for the master CPU every day. In other words, in a case where the setting of the regular log is the "every day," the totalizing unit 701 adds 2 points as the initial value; further, in a case where the setting of the regular log is the "every week," the totalizing unit 701 adds 14 points as the initial value.

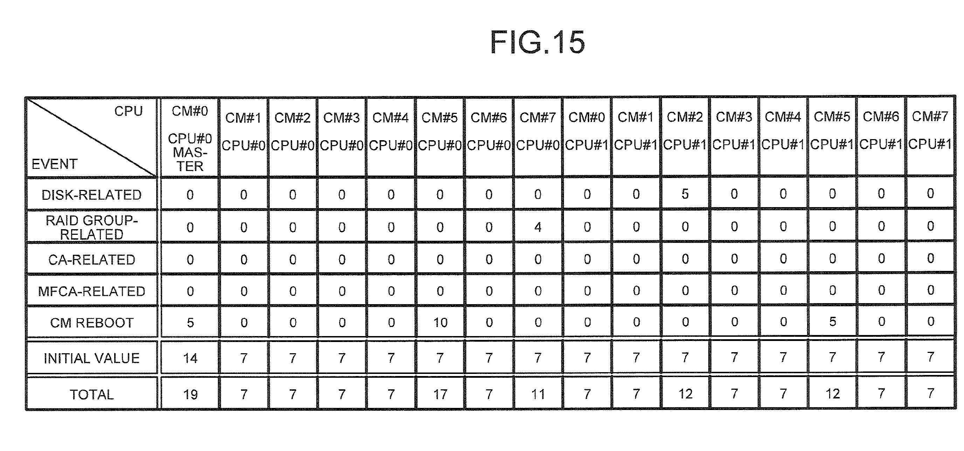

An example of an integration result of the point addition tables will be described with reference to FIG. 15. FIG. 15 is a diagram illustrating an example of the integration result of the point addition tables. Further, the description of the example illustrated in FIG. 15 will be made in connection with a case where the totalizing unit 701 totalizes the point addition tables illustrated in FIGS. 8 to 10.

As illustrated in FIG. 15, the totalizing unit 701 extracts "5" from the "CM Reboot" event corresponding to "CM#0 CPU#0;" "10" from the "CM Reboot" event corresponding to "CM#5 CPU#0;" and "4" from the "RAID Group-related" event corresponding to "CM#7 CPU#0." In addition, the totalizing unit 701 extracts "5" from the "Disk-related" event corresponding to "CM#2 CPU#1;" and "5" from the "CM Reboot" event corresponding to "CM#5 CPU#1."

The totalizing unit 701 sets the initial values for the respective CPUs. For example, as illustrated in FIG. 15, "CM#0 CPU#0" serving as the master CPU is set to the initial value "14," and the other CPUs are set to the initial value "7." Then, the totalizing unit 701 adds the initial value to the accumulated value of the extracted point addition values to totalize the total values for each CPU. In this way, the totalizing unit 701 generates the point addition table obtained by totalizing the point addition tables of the respective CPUs. In addition, the totalizing unit 701 outputs the totalized results to the transmitting unit 703.

Further, since the CPU 700 serving as the master CPU has a lot of processes and controls to do, the totalizing unit 701 may add and totalize the initial values for the master CPU. For example, the totalizing unit 701 adds 10 points as the initial value for the master CPU.

Returning to FIG. 5, the calculating unit 702 calculates the upper limit for each CPU based on the event arisen from each CPU. For example, the calculating unit 702 calculates the upper limit of capacitance for the logs to be acquired for each CPU, based on the totalized result from the totalizing unit 701 and the number of the CPUs included in the plurality of the CMs.

Specifically, the calculating unit 702 calculates the upper limit of the log capacitance for each CPU, based on "(the limit value of the regular log - the log header size - the size of the configuration information) x (the total value for each CPU/the total value of all the CPUs)." Herein, the limit value of the regular log is assumed to be 1.44 MB per log. In addition, the log header size is a fixed value. In addition, the configuration information includes information and the like which are related to the disk and the RAID included in the storage device. The configuration information is set to a fixed value for each storage device.

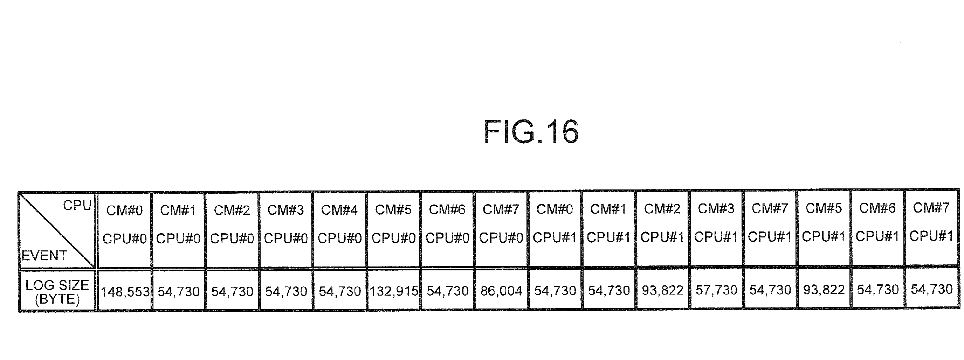

An example of results obtained from an upper limit calculation process will be described with reference to FIG. 16. FIG. 16 is a diagram illustrating an example of results obtained from the upper limit calculating process. Further, in the example illustrated in FIG. 16, the description will be made in connection with a case where the calculating unit 702 calculates the upper limit of the log capacitance for each CPU using the totalized point addition table illustrated in FIG. 15. In addition, the limit value 1.44 MB of the regular log is assumed to be 1,457,650 (bytes) managed in the storage device 100a. In addition, it is assumed that the log header size is 500 (bytes) and the size of the configuration information 300,000 (bytes).

The calculating unit 702 totalizes the total values of the respective CPUs using the totalized point addition table to calculate the total value "148" of all the CPUs. For example, the calculating unit 702 calculates "148,553 (bytes)" as the upper limit of the log size for CPU#0 of CM#0, based on "(1,457,650 (bytes) - 500 (bytes) - 300,000 (bytes)) x (19 (points)/148 (points))."

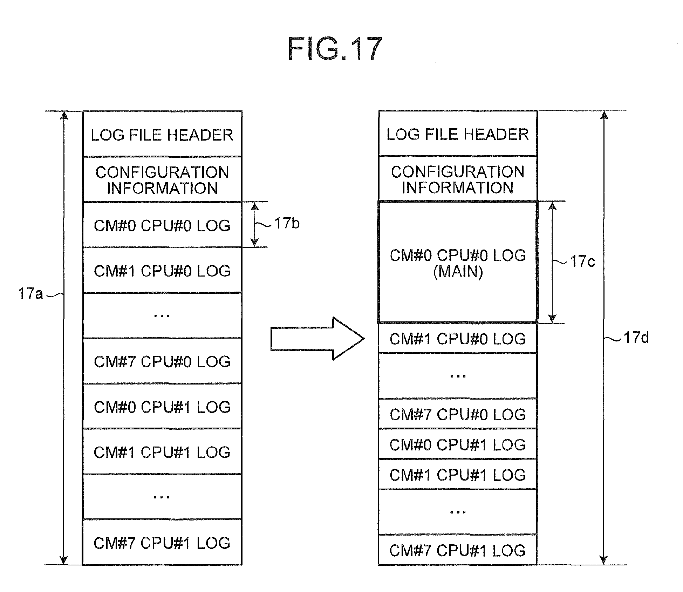

Next, an example of a log size changing process will be described with reference to FIG. 17. FIG. 17 is a diagram illustrating an example of the log size changing process. The reference numeral 17a in FIG. 17 represents the log file of all the CPUs in a case where no CPU arises an event. In addition, the reference numeral 17a in FIG. 17 indicates the log file capacitance (in this case, 1.44 MB) for all the CPUs. In addition, the reference numeral 17b in FIG. 17 indicates the capacitance (for example, 136,135 bytes) for storing the logs of CPU#0 of CM#0.

The reference numeral 17d in FIG. 17 represents the log file of all the CPUs in a case where the disk error event is arisen from CPU#0 of CM#0. In addition, the reference numeral 17d in FIG. 17 indicates the log file capacitance (in this case, 1.44 MB) for all the CPUs. In addition, the reference numeral 17c in FIG. 17 indicates the capacitance (for example, 177,305 bytes) for storing the logs of CPU#0 of CM#0.

In this way, when the disk error event is arisen from CPU#0 of CM#0, the calculating unit 702 increases the log size of CPU#0 of CM#0 from 136,135 bytes to 177,305 bytes. Further, the log file capacitance for all the CPUs is not changed but remains at 1.44 MB.

The transmitting unit 703 transmits the upper limit calculated by the calculating unit 702 and the point addition table totalized by the totalizing unit 701, which is described below, to the CPU 600 serving as the other CPU. The receiving unit 704 receives the log files from the CPUs 600 serving as the other CPUs.

The second generation unit 705 generates the log file of all the CPUs which includes the log file generated by the first generation unit 605 of the subject device and the log files received from the respective the CPUs 600 serving as the other CPUs, in order based on the log format table 202. Further, the log file generated by the second generation unit 705 is referred to as the "log file of all the CPUs" for distinction from the log file generated by the first generation unit 605.

The delivery unit 706 delivers the log file of all the CPUs generated by the second generation unit 705 to the remote support center.

### Processing Operations of Storage Device according to Second Embodiment

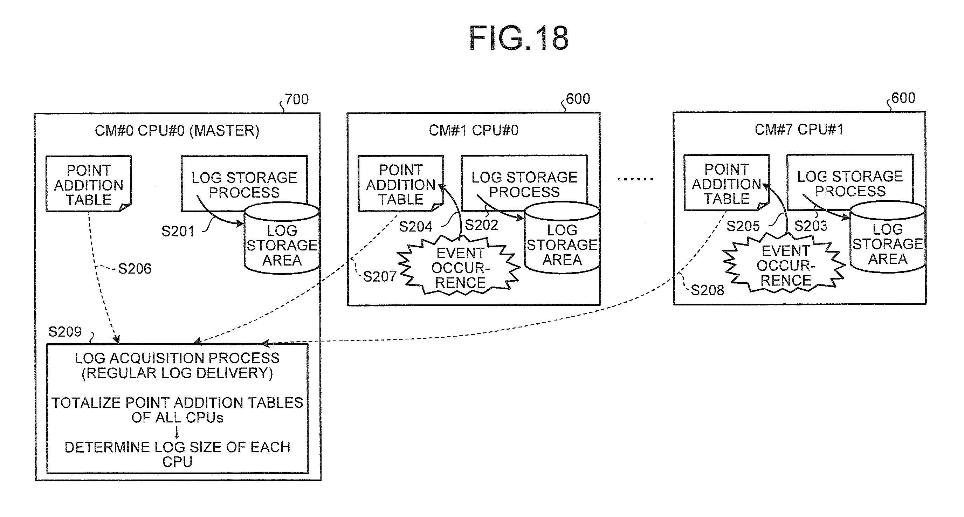

Next, processing operations performed by the storage device 100a according to the second embodiment will be described with reference to FIG. 18. FIG. 18 is a diagram illustrating an example of process operations of the storage device according to the second embodiment. As illustrated in FIG. 18, the CPU 700 serving as the master CPU and the CPUs 600 serving as the other CPUs perform a log storage process of storing the logs in the log storage area 201 (steps S201 to S203).

In addition, in a case where an event is arisen from the CPU 700 serving as the master CPU or the CPUs 600 serving as the other CPUs, a point addition process for the event is performed. In the example illustrated in FIG. 18, the CPUs 600 serving as the other CPUs add points to the point addition table 501 (steps S204 and S205).

In a case where it is determined that it is a regular log delivery time, the CPU 700 serving as the master CPU acquires the point addition tables from the respective CPUs (steps S206 to S208). Then, the CPU 700 serving as the master CPU totalizes the point addition tables, and calculates the upper limit of the log size for each CPU (step S209).

### Processing Sequence in Storage Device according to Second Embodiment

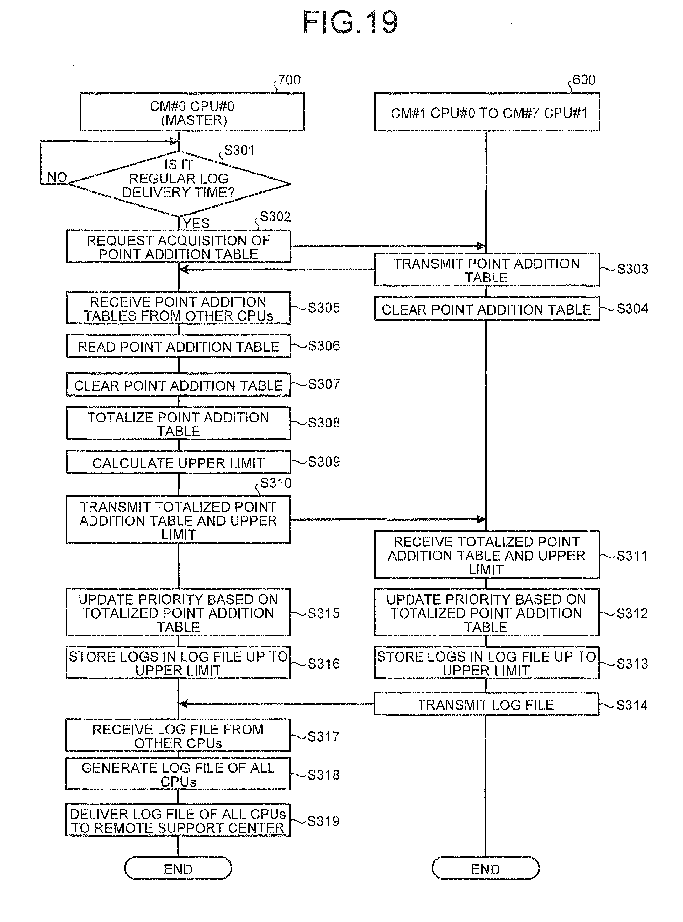

Next, a processing sequence in the log file delivery process of the storage device 100a according to the second embodiment will be described with reference to FIG. 19. FIG. 19 is a flowchart illustrating the processing sequence in the log file delivery process of the storage device according to the second embodiment.

As illustrated in FIG. 19, in a case where it is determined that it is the regular log delivery time (Yes in step S301), the totalizing unit 701 in the CPU 700 serving as the master CPU requests the point addition tables 501 from the other CPUs (step S302).

The point adding units 602 in the CPUs 600 serving as the other CPUs transmit the point addition tables 501 to the master CPU 700 (step S303). After the transmission of the point addition tables 501 to the master CPU 700, the point adding units 602 clear the point addition tables 501 (step S304).

The totalizing unit 701 in the CPU 700 serving as the master CPU receives the point addition tables 501 from the other CPUs (step S305). In addition, the totalizing unit 701 reads the point addition table 501 out of the storage unit 500 (step S306). Then, after the read-out of the point addition table 501, the totalizing unit 701 clears the point addition table 501 (step S307).

The totalizing unit 701 totalizes the point addition table 501 and the point addition tables 501 which have been received from the other CPUs (step S308). Further, the totalizing unit 701 outputs the totalized result to the calculating unit 702. The calculating unit 702 calculates the upper limits of capacitance for the logs to be acquired, based on the totalized result and the number of arithmetic processing devices (step S309). The calculating unit 702 transmits the totalized result and the calculated upper limits to the other CPUs (step S310). In addition, the calculating unit 702 outputs the totalized result and the calculated upper limit to the changing unit 604.

The changing units 604 in the CPUs 600 serving as the other CPUs receive the totalized result and the upper limits (step S311). Then, each changing unit 604 changes the priority based on the totalized result (step S312). Further, the changing unit 604 outputs the changed priority and the upper limit to the first generation unit 605.

The first generation unit 605 stores the logs up to the upper limit of the log file (step S313). The transmitting unit 606 transmits the log file to the master CPU 700 (step S314).

In addition, the changing unit 604 in the CPU 700 serving as the master CPU changes the priority based on the totalized result (step S315). Further, the changing unit 604 outputs the changed priority and the upper limit to the first generation unit 605. The first generation unit 605 stores the logs up to the upper limit of the log file (step S316).

The receiving unit 704 in the CPU 700 serving as the master CPU receives the log files from the CPUs 600 serving as the other CPUs (step S317). Then, the second generation unit 705 generates the log file of all the CPUs including the log files received from the CPUs 600 serving as the other CPUs and the log file generated by the first generation unit 605 of the subject device (step S318). Thereafter, the delivery unit 706 delivers the log file of all the CPUs to the remote support center (step S319).

### Effect of Second Embodiment

As described above, the storage device 100a according to the second embodiment is able to calculate the upper limits for the respective CPUs based on the events arisen from the corresponding CPUs, and generate the log file. For this reason, even when the events are arisen from a certain CPU over the log size, it is possible to prevent the missing of the useful logs.

In addition, the storage device 100a according to the second embodiment clears the point addition tables on the respective CPUs after a log acquisition process of delivering the regular log is started. For this reason, the point addition tables totalized using the master CPU are transmitted at the time when the log files are created in the respective CPUs. Then, the respective CPUs each perform a process of changing the storage order based on the point addition table received from the master CPU.

For example, the storage device 100a according to the second embodiment changes the storage order based on the addition points of four EVENT-based log types as follows: EVENT_CM, EVENT_CA, EVENT_MFCA, and EVENT_DI. As a result, even when the number of the EVENT-based logs increases at the time of arising the event, it is possible to preferentially hold the EVENT-based logs useful for the log analysis using the events.

Further, the CPUs other than the master CPU may notify the master CPU of only the total values in the point addition tables without transmitting the point addition tables to the master CPU.

### [c] Third Embodiment

The invention may be embodied in a variety of other forms as well as the embodiments described above. Therefore, in a third embodiment, other embodiments included in the invention will be described.

### System Configuration etc.

Some or all of the above-described processes as performed automatically among those in the embodiments described above may be performed manually. Alternatively, some or all of the described-above processes as performed manually may be performed automatically through a known method. Otherwise, the processing sequence, the control sequence, and the specific names described in the above sentences along with the drawings may be changed arbitrarily if not otherwise specified.

In addition, the information stored in the illustrated storage unit is described as merely exemplary, and not necessarily stored as illustrated in the drawing. In addition, the processing sequence in each step of the process in the embodiment may be changed according to different loads and usage environments. For example, the processes of steps S103 and S105 illustrated in FIG. 4 may be performed simultaneously.

In addition, the illustrated respective components are embodied in a mechanical sense, and not necessarily configured in a physical sense as illustrated in the drawing. For example, the CPUs 600 and 700 included in the storage device 100a may be configured such that the changing unit 604 and the first generation unit 605 are integrated. Furthermore, some or all of the respective processing functions performed in the respective devices may be realized using the CPU and programs which are interpreted and executed by the CPU, or may be realized as hardware using wired logics.

It is possible to prevent the missing of useful logs.

## Claims

1. A control system (100) that is provided with a plurality of control devices (110∼180) each of which includes an arithmetic processing device (300, 400) and a storage unit (200) that stores logs of the arithmetic processing device (300, 400), the control system (100) comprising:
a first generation unit (302) that generates a first log file such that the plurality of logs of the arithmetic processing devices stored in the storage unit of each control device are stored within an upper limit of log capacitance determined based on a total number of the arithmetic processing devices in the control system and in order based on priorities;
a second generation unit (402) that generates a second log file including a plurality of the first log files of the arithmetic processing devices; and
a delivery unit (403) that delivers the second log file to an external device.

2. The control system according to claim 1, further comprising:
a calculating unit (702) that calculates the upper limit for each arithmetic processing device based on events arisen in each of the arithmetic processing devices; and
a notification unit (703) that notifies the arithmetic processing device in each control device of the calculated upper limit.

3. The control system according to claim 2,
wherein the arithmetic processing devices each further comprise
a point adding unit (602) that adds a point for an event arisen from the corresponding arithmetic processing device based on the log to be stored with being associated with the event, and
a totalizing unit (701) that acquires an addition result of the point adding unit, and totalizes the result, and
wherein the calculating unit (702) calculates the upper limit of capacitance for the logs to be acquired for each arithmetic processing device based on a totalized result of the totalizing unit and the total number of the arithmetic processing devices in the control system.

4. The control system according to claim 3,
wherein the arithmetic processing device further comprises
a changing unit (604) that changes a storage order defined in the priorities, based on the addition result of the point adding unit, and
wherein the first generation unit (605) generates the first log file such that the plurality of the logs stored in the storage unit are stored within the upper limit of the log capacitance and in a storage order changed by the changing unit.

5. A log delivery method for a control system (100) which is provided with a plurality of control devices (110∼180) each of which includes an arithmetic processing device (300, 400) and a storage unit (200) for storing logs of the arithmetic processing device (100), the method comprising:
generating a first log file such that the plurality of logs of the arithmetic processing devices stored in the storage unit of each control device are stored within the upper limit of log capacitance determined based on the total number of the arithmetic processing devices in the control system and in order based on priorities;
generating a second log file that includes a plurality of the first log files of the arithmetic processing devices; and
delivering the second log file to an external device.
